# EUROPÄISCHE PATENTSCHRIFT

(11) **EP 0 794 034 B1**
(45) Veröffentlichungstag und Bekanntmachung des Hinweises auf die Patenterteilung: **10.04.2002**
(21) Anmeldenummer: 97100491.6
(22) Anmeldetag: 15.01.1997
(51) Int. Cl.: B23Q 16/10

(54) **Vorrichtung zur Aufnahme von Werkstücken**
Device for holding workpieces
Dispositif pour tenir des pièces

(30) Priorität: 24.02.1996 DE 29603370 U; 24.02.1996 DE 29603371 U
(43) Veröffentlichungstag der Anmeldung: 10.09.1997
(73) Patentinhaber: Haff & Schneider GmbH & Co. OHG, 87484 Nesselwang (DE)
(72) Erfinder: Mörz, Fridolin, 87787 Wolfertschwenden (DE)
(74) Vertreter: Munk, Ludwig, Dipl.-Ing.

(56) Entgegenhaltungen:
- EP-A- 0 245 177
- EP-A- 0 256 628
- DE-U- 29 603 370
- DE-U- 29 603 371
- FR-A- 2 424 792
- GB-A- 2 268 894

## Beschreibung

Die Erfindung betrifft eine Vorrichtung zur Aufnahme von Werkstücken gemäß Oberbegriff des Anspruchs 1.

Eine Vorrichtung dieser Art ist aus der EP 256 628 A bekannt. Bei dieser bekannten Anordnung besitzt die Schieberanordnung einen die Teilspindel flankierenden, rechtwinklig hierzu angeordneten Stößel. Die Indexiereinrichtung besitzt einen mit dem Stößel über eine Stift-Schlitz-Verbindung zusammenwirkenden Schwenkhebel, der mit einem in eine Umfangsverzahnung der Teilspindel zum Eingriff bringbaren Rastzahn versehen ist. Gleichzeitig ist durch den Stößel ein mit der Teilspindel über eine Klinkenanordnung zusammenwirkendes Stellglied zum Verdrehen der Teilspindel betätigbar. Bei dieser bekannten Vorrichtung ist eine spielfreie Indexierung der Teilspindel nicht gewährleistet. Ein eventeull vorhandenes Lagerspiel des Schwenkhebels der Indexiereinrichtung wirkt sich ungünstig auf die Spielfreiheit aus. Abgesehen davon ist die Indexiereinrichtung hier jeweils nur mit einem Zahn im Eingriff mit der Teilspindel, was bei der Verwendung kleiner Zähne die übertragbaren Kräfte beschränkt und bei der Verwendung großer Zähne zu vergleichsweise großen Teilungsschritten führt. Eine weitere Fehlerquelle kann darin bestehen, dass bei der bekannten Vorrichtung die Teilspindel nicht direkt durch das Betätigungselement gedreht wird, sondern unter Zwischenschaltung weiterer Stellglieder.

Die FR 24 24 792 zeigt eine Teilvorrichtung mit einem stationären Tisch und einer drehbar hierauf gelagerten Platte, die mittels einer Indexiereinrichtung gegenüber dem Tisch arretierbar ist. Diese Indexiereinrichtung besitzt ein in eine Verzahlung des stationären Tischgehäuses und in eine entsprechende Verzahnung der drehbaren Platte eindrückbares Formschlusselement, das als die zugeordneten Verzahnungen überdeckendes Tellerrad mit an die zugeordneten Verzahnungen angepasster Gegenkontur ausgebildet ist. Die Indexiereinrichtung dieser bekannten Anordnung ist jedoch nicht mittels eines bahngesteuerten Betätigungselements betätigbar. Außerdem erweist sich eine Tellerradanordnung hier vorliegender Art als sehr sperrig und voluminös.

Hiervon ausgehend ist es daher die Aufgabe der vorliegenden Erfindung, bei einer Vorrichtung gattungsgemäßer Art eine hohe Genauigkeit und Zuverlässigkeit zu gewährleisten.

Diese Aufgabe wird durch das Kennzeichen des Anspruchs 1 gelöst.

Durch das in eine Bohrung der Teilspindel zum Eingriff bringbare Betätigungselement können in vorteilhafter Weise sämtliche Entriegelungs-Positionierungs- und Verriegelungsvorgänge sowie die Verdrehung der Teilspindel ohne gesonderte Antriebe durchgeführt werden. Da das Betätigungselement einfach mit der Werkzeugmaschine gekoppelt sein kann, lässt sich bei Werkzeugmaschinen mit Bahnsteuerung der Teilungsvorgang unter Ausnutzung der gesteuerten Verfahrbewegungen der Werkzeugmaschine ohne jeden zusätzlichen Aufwand durchführen. Der Teilvorgang kann dabei in vorteilhafter Weise unter Ausnutzung der Programmsteuerung der Werkzeugmaschine programmgesteuert ablaufen, ohne dass hierzu eigene Antriebs-und Steuerungselemente erforderlich wären. Dadurch, dass die Indexiereinrichtung ein in eine gehäusefeste Verzahnung und in eine entsprechende Verzahnung an der Teilspindel einrückbares Formschlusselement aufweist, werden eine exakte Winkelteilung in sehr kleinen Teilschritten sowie eine spielfreie Klemmung der Teilspindel in jeder gewünschten Winkelstellung ermöglicht. In Folge der Ausbildung des Formschlusselements als Zahnradsegment wird sichergestellt, dass in der Einrückstellung jeweils mehrere Zähne des Zahnradsegments im Eingriff mit den zugeordneten Verzahnungen des Gehäuses und der Teilspindel sind, wodurch nicht nur hohe Kräfte übertragen werden können, sondern auch Teilungsfehler weitestgehend reduziert werden können. Die genannten Maßnahmen ergeben in vorteilhafter Weise auch einen sehr kurzen Kraftschluss, was sich vorteilhaft auf die erzielbare Genauigkeit auswirkt. Da die axial verschiebbare Schieberanordnung der erfindungsgemäßen Vorrichtung zwei mit Keilflächen versehene Elemente aufweist, die zum Ein- und Ausrücken des Formschlusselements mit zugeordneten, dortigen Keilflächen zusammenwirken, wird in vorteilhafter Weise sichergestellt, dass das Formschlusselement spielfrei zwischen den mit Keilflächen versehenen Elementen der Schieberanordnung angeordnet sein kann, was ebenfalls für die Genauigkeit und Zuverlässigkeit der erfindungsgemäßen Vorrichtung sehr zuträglich ist.

Vorteilhafte Ausgestaltungen und zweckmäßige Fortbildungen der übergeordneten Maßnahmen sind in den Unteransprüchen angegeben.

Vorteilhaft kann die zum Einrücken des Formschlusselements vorgesehene Keilfläche des Formschlusselements bezüglich der Verzahnungen des Gehäuses und der Teilspindel mittig angeordnet sein. Hierdurch ergibt sich in vorteilhafter Weise eine weitgehend gleichmäßige Kraftverteilung durch das Formschlußelement auf die beiden zugeordneten Verzahnungen.

Eine weitere zweckmäßige Maßnahmen kann darin bestehen, daß an der Schieberanordnung ein durch eine zugeordnete Ausnehmung des Gehäuses aus diesem herausgeführtes Betätigungselement für manuelle Betätigung angebracht ist. Diese Maßnahme ermöglicht eine einfache manuelle Bestückung eines mehrere Aufspannebenen aufweisenden Werkstückträgers außerhalb einer eine Bahnsteuerung aufweisenden Werkzeugmaschine.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung entnehmbar.

In der nachstehend beschriebenen Zeichnung zeigen:
- Figur 1: eine schematische Seitenansicht einer erfindungsgemäßen Vorrichtung teilweise im Schnitt und
- Figur 2: eine schematische Vorderansicht des oberen Teils der Anordnung gemäß Figur 1.

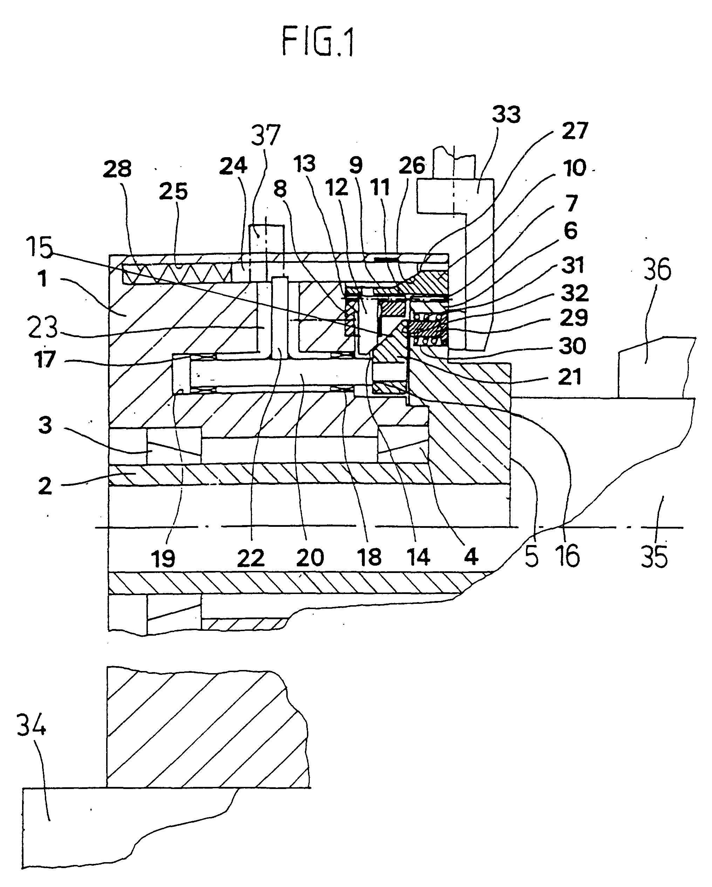

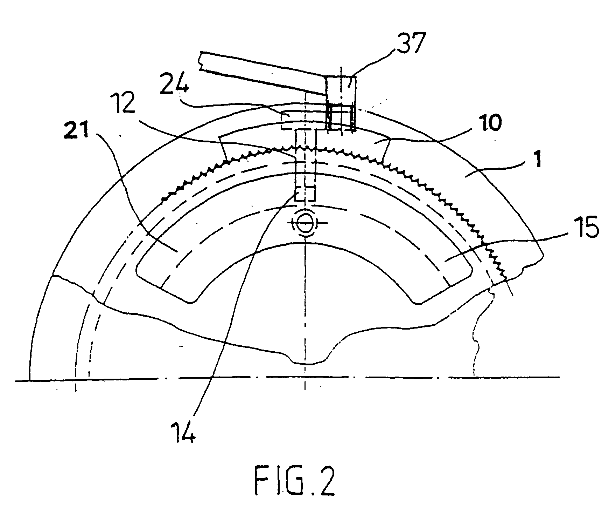

Die den Figuren 1 und 2 zugrundeliegende Vorrichtung ist auf dem Werkstücktisch 34 einer Werkzeugmaschine, beipsielsweise einer numerisch gesteuerten Fräsmaschine, aufnehmbar. Die Vorrichtung besitzt einen Werkstückträger 35, auf dem die mittels der Werkzeugmaschine zu bearbeitenden Werkstücke 36 aufnehmbar sind, und eine dem Werkstückträger 35 zugeordnete Teileinrichtung, mittels welcher der Werkstückträger 35 um einen vorgebbaren Winkel drehbar und in einer vorgegebenen Winkelstellung arretierbar ist. Dies ermöglicht die Bearbeitung der Werkstücke 36 auf mehreren Seiten bzw. bei einseitiger Bearbeitung die Verwendung eines Werkstückträgers 35 mit mehreren Aufspannebenen.

Die oben genante Teileinrichtung besitzt ein Gehäuse 1, in welchem eine Teilspindel 2 über Kelgelrollenlager 3, 4 drehbar gelagert ist. An der vom Gehäuse 1 nach außen vorstehenden, vorderen Stirnseite 5 der Teilspindel 2 ist der Werkstückträger 35 fixierbar. Dieser kann beispielsweise ein Spannfutter, eine Spitze zum Spannen zwischen Spitzen in Verbindung mit einem Reitstock oder, wie im dargestellten Beispiel, ein Aufspanntisch mit mehreren Aufspannebenen sein. Das Gehäuse 1 weist an mindestens einer Außenfläche Halteeinrichtungen auf, mit denen es auf dem Werkstücktisch 34 fixiert werden kann. Bei Verwendung eines langen Werkstückträgers 35 kann ein dem Gehäuse 1 gegenüberliegender Lagerbock zum Abstützen des gehäusefernen Endes des Werkstückträgers 35 vorgesehen sein. Das Gehäuse 1 und der gegebenenfalls vorgesehene Lagerbock können dabei auf einer gemeinsamen Basisplatte aufgenommen sein, die auf den Werkstücktisch 34 aufgespannt wird.

Die Teilspindel 2 hat einen scheibenförmig erweiterten Teil 6, an dessen Außenumfang eine Verzahnung 7 vorgesehen ist. Neben dem scheibenförmigen Teil 6 liegt ein am Gehäuse 1 drehfest fixierter Zahnring 8 oder ein Segment hiervon mit einer der Verzahnung 7 an der Teilspindel 2 entsprechenden Außenverzahnung 9. Der Zahnring 8 bzw. das Zahnringsegment ist derart angeordnet, daß der Teilkreis seiner Außenverzahnung 9 mit dem Teilkreis der Verzahnung 7 an der Teilspindel 2 koaxial und durchmessergleich ist.

Über die beiden Verzahnungen 7 und 9 erstreckt sich ein radial verschiebbares Formschlußelement 10, das zur Bewerkstelligung einer Verriegelung in die beiden Verzahnungen 7 und 9 eingepreßt und zur Entriegelung ausgerückt wird. Die Verzahnung 7 und 9 und das Formschlußelement 10 bilden dementsprechend eine Indexiereinrichtung zur exakten gegenseitigen Arretierung der Verzahnungen 7, 9 beziehungsweise der hiermit verbundenen Teile inform von Gehäuse 1 und Teilspindel 2. Das Formschlußelement 10 ist als innenverzahntes Zahnringsegment mit einer an die Außenverzahnung 9 und die Verzahnung 7 an der Teilspindel 2 angepaßten Innenverzahnung 11 ausgebildet. Zur Führung des Formschlußelements 10 ist an seiner Innenseite ein radial verlaufender Führungsstift 12 angeordnet, der in einer gehäusefesten Querbohrung 13 radial verschiebbar geführt ist. Die Querbohrung 13 befindet sich in der dargestellten Ausführung in einem nicht verzahnten Teil des Zahnrings bzw. Zahnringsegments 8. In der Querbohrung 13 kann auch eine Gleitbuchse eingesetzt sein, in der der Führungsstift 12 verschiebbar geführt ist.

Der Führungsstift 12 weist an seinem inneren freien Ende eine Schrägfläche 14 auf, die mit einer Abschrägung 15 an einem im Gehäuse 1 axial bewegbaren Schieber 16 zusammenwirkt. In der Verriegelungsstellung ist die Schrägfläche 14 gegenüber der Abschrägung 15 drucklos oder hiervon beabstandet. Der Schieber 16 enthält einen über Kugelbuchsen 17 und 18 in einer Längsbohrung 19 im Gehäuse 1 verschiebbar geführten Bolzen 20 und ein an seinem äußeren Ende angeordnetes ringsegmentförmiges Druckstück 21. An diesem befindet sich die Abschrägung 15 zum Eingriff mit der Schrägfläche 14. Zwischen den Kugelbuchsen 17 und 18 ist an dem Bolzen 20 ein Querstift 22 befestigt, der eine quer zur Längsbohrung 19 verlaufende Ausnehmung 23 im Gehäuse 1 mit axialem Bewegungsfreiheitsgrad durchragt und mit einem radial außerhalb des Bolzens 20 angeordneten, axial beweglichen Keilschieber 24 verbunden ist. Der Schieber 16 und der hiervon starr verbundene Keilschieber 24 bilden dementsprechend eine einheitlich verschiebbare Doppelschieberanordnung.

Der Keilschieber 24 ist in einer zur Drehachse der Teilspindel 2 parallelen Ausnehmung 25 im Gehäuse 1 verschiebbar geführt und weist an seinem dem Formschlußelement 10 zugewandten Ende eine Keilfläche 26 auf. Diese wirkt mit einer Keilfläche 27 an der Außenseite des Formschlußelements 10 zusammen. An dem anderen Ende des Keilschiebers 24 greift eine Druckfeder 28 an, die den Keilschieber 24 in Richtung des Formschlußelements 10 beaufschlagt.

In dem scheibenförmigen Teil 6 der Teilspindel 2 sind vier mit gleichem Abstand von der Teilspindelachse angeordnete, gleichwinklig voneinander beabstandete Druckbolzen 29 in entsprechenden Bohrungen 30 axial beweglich angeordnet. Am inneren Ende der Druckbolzen 29 kann jeweils ein hier nicht dargestellter Sicherungsring vorgesehen sein, der in der Verriegelungsstellung der Teileinrichtung an der inneren Stirnfläche des scheibenförmigen Teils 6 anliegt und ein Herausfallen des zugeordneten Druckbolzens 29 verhindert. Nach außen sind die Druckbolzen 29 jeweils durch eine Feder 31 beaufschlagt. Die nach innen weisende Stirnfläche 32 der Druckbolzen 29 besitzt eine zur Anlage an dem Druckstück 21 geeignete Konfiguration. Die Druckbolzen 29 haben einen verbreiterten Kopf, dessen äußere Stirnfläche in der Verriegelungsstellung der Teileinrichtung mit der äußeren Planfläche des scheibenförmigen Teils 6 abschließt.

Die Teileinrichtung ist mit einem Betätigungselement 33 koppelbar, das in eine in mehreren Achsen verfahrbare Bearbeitungsspindel der Werkzeugmachine, bei der es sich zweckmäßig um eine numerisch gesteuerte Werkzeugmaschine handelt, eingesetzt oder an deren mehrachsig verfahrbaren Bearbeitungseinheit befestigt ist.

Zweckmäßig wird das Betätigungselement 33 wie ein Werkzeug mittels eines Werkzeugwechslers eingesetzt. Das Betätigungselement besitzt einen mit einem der Druckbolzen 29 zum Eingriff bringbaren Taster, der zweckmäßig mit Drehfreiheitsgrad in die dem Druckbolzen 29 zugeordnete Bohrung 30 eingreifen kann.

Der Teilvorgang läuft wie folgt ab:

Das Betätigungselement 33 wird mit Hilfe der Maschinensteuerung zu einem der Druckbolzen 29 verfahren und drückt diesen ein. Dabei drückt die nach innen weisende Stirnfläche 32 des federbelasteten Druckbolzens 29 auf das ringsegmentflörmige Druckstück 21 und schiebt damit den Schieber 16 gemeinsam mit dem Bolzen 20 axial nach innen. Die Abschrägung 15 des Druckstücks 21 gelangt so zur Anlage mit der Schrägfläche 14 des Führungsstifts 12 und drückt diesen zusammen mit dem Formschlußelement 10 radial nach außen.

Gleichzeitig mit der Verschiebung des Bolzens 20 wird der mit ihm über den Querstift 22 starr verbundene Keilschieber 24 verschoben und gibt dabei das Formschlußelement 10 zur radialen Verschiebung nach außen frei. Durch die Verlagerung des Formschlußelements 10 nach außen gelangt seine Innenverzahnung 11 gleichzeitig außer Eingriff mit der gehäusefesten Außenverzahnung 9 und der Verzahnung 7 an der Teilspindel 2. Dadurch wird die Verriegelung der Teilspindel 2 aufgehoben.

Anschließend verfährt das Betätigungselement 33 entlang eines Kreisbogens mit einem dem Abstand der Druckbolzenachse zur Teilspindelachse entsprechenden Radius in eine gewünschte Winkelstellung, wobei die Teilspindel 2 mitgenommen und damit entsprechend verdreht und in die gewünschte Winkelstellung gebracht wird. Die Stirnfläche 32 des Druckbolzens 29 gleitet bei der Verdrehung der Teilspindel 2 weiter auf dem ringsegmentförmigen Druckstück 21, so daß das Formschlußelement 10 außer Eingriff mit den Verzahnungen 7, 9 und damit die Teilspindel 2 entriegelt bleibt.

Nach Erreichen der gewünschten Position, fährt das Betätigungselement 33 zurück. Dabei wird der Druckbolzen 29 durch die Feder 31 in seine Ausgangsposition verschoben. Der über die Druckfeder 28 an die Stirnfläche 32 des Druckbolzens 29 angepreßte Schieber 16 und der mit ihm starr verbundene Keilschieber 24 machen diese Axialbewegung mit, wobei das Formschlußelement 10 von dem Keilschieber 24 gleichzeitig in die gehäusefeste Verzahnung 9 und die Verzahnung 7 an der Teilspindel eingepreßt wird und diese somit spielfrei verbindet.

Die erforderlichen Bewegungen des Betätigungselements 33 können durch entsprechende Programmierung der Steuerung der Werkzeugmaschine vorgegeben werden. Dasselbe gilt für das Aufnehmen und Ablegen des Betätigungselements 33. Es kann also eine automatische Betriebsweise erreicht werden. Anstelle eines auswechselbaren Betätigungselements könnte dieses auch fest an einem Spindelkopf etc. angebracht sein.

Bei dem dargestellten Ausführungsbeispiel kann pro Eingriff des Betätigungselements 33 in die Teilspindel 2 eine Maximalverschwenkung von etwa 120° erreicht werden. Diese Ausführung ist daher besonders für den Einsatz der Teileinrichtung mit horizontal auf einem Werkstück angeordneter Teilspindel 2 geeignet, da hier die Verfahrmöglichkeit des Betätigungselements 33 durch den Werkstücktisch beschränkt ist. Für Schwenkbewegungen von mehr als 120° muß dann das Betätigungselement 33 zum nächsten Druckbolzen 29 verfahren und ein erneuter Positioniervorgang durchgeführt werden.

Die Erfindung ist jedoch nicht auf das dargestellte Ausführungsbeispiel beschränkt. So kann beispielsweise das ringsegmentförmige Druckstück 21 auch als Vollring ausgebildet sein. Bei Verwendung der Teileinrichtung mit vertikal angeordneter Teilspindel kann so eine 360°-Drehung ohne Umsetzen des Betätigungselements 33 durchgeführt werden.

Die Bestückung des Werkstückträgers 35 mit den Werkstücken 36 erfolgt zweckmäßig außerhalb der Werkzeugmaschine. Dasselbe gilt für die Entladung. Dadurch können Stillstandzeiten eingespart werden. Um außerhalb der Werkezugmaschine die Teileinrichtung manuell entriegeln zu können, ist an der Schieberanordnung, zweckmäßig am radial äußeren Keilschieber 24, ein durch eine geeignete Ausnehmung des Gehäuses 1 aus diesem herausgeführtes Betätigungselement 37 angebracht, das mit einem Griff versehen ist. Um den manuellen Gebrauch der Teileinrichtung zu erleichtern, kann eine mit einer Marke zusammenwirkende Skala vorgesehen sein. Zweckmäßig ist der scheibenförmige Teil 6 der Teilspindel als Träger einer Skala ausgebildet, die mit einer gehäuseseitigen Marke zusammenwirkt.

Die mit unbearbeiteten Werkstücken bestückte Vorrichtung wird zweckmäßig im Wechsel mit einer bereits bearbeitete Werkstücke tragenden Vorrichtung in die Werkzeugmaschine gebracht. Zweckmäßig ist diese hierzu mit einem Palettenwechsler versehen.

## Patentansprüche

1. Vorrichtung zur Aufnahme von Werkstücken, insbesondere für Werkzeugmaschinen mit Bahnsteuerung, vorzugsweise numerisch gesteuerte Werkzeugmaschinen, mit einer Teileinrichtung, die eine in einem Gehäuse (1) drehbar gelagerte, in vorgebbare Winkelstellungen bringbareTeilspindel (2) aufweist, die mit einem Werkstückträger (35) verbunden ist, wobei die Teilspindel (2) mittels eines bahngesteuerten Betätigungselements (33) betätigbar ist, durch das eine der Teilspindel (2) zugeordnete Indexiereinrichtung (7,9,10), mittels welcher die Teilspindel (2) in einer vorgebbaren Winkelstellung arretierbar ist, in eine die Teilspindel (2) freigebende Stellung bringbar ist und durch das die Teilspindel (2) verdrehbar ist und wobei die Indexiereinrichtung (7,9,10) mittels einer im Gehäuse (1) angeordneten Schieberanordnung (16,24) betätigbar ist, die mittels des Betätigungselements (33) entgegen der Kraft wenigstens einer Rückstellfeder (28) verstellbar ist, **dadurch gekennzeichnet, dass** die Indexiereinrichtung (7,9,10) ein in eine gehäusefeste Verzahnung (9) und eine entsprechende Verzahnung (7) an der Teilspindel (2) einrückbares Formschlusselement (10) aufweist, das als in die gehäusefeste Verzahnung (9) und die Verzahnung (7) an der Teilspindel (2) einpressbares, die Verzahnungen (7,9) überdeckendes Zahnradsegment mit einer an die Verzahnungen (7,9) angepassten Gegenkontur ausgebildet ist und dass die in Richtung der Achse der Teilspindel (2) axial verschiebbar angeordnete Schieberanordnung (16,24), die zwei mit Keilflächen (15,26) versehene Elemente aufweist, die zum Ein- und Ausrücken des Formschlusselements (10) mit zugeordneten, am Formschlusselement (10) angebrachten Keilflächen (14,27) zusammenwirken, durch das Betätigungselement (33) axial verschiebbar ist, das zum Drehen der Teilspindel (2) in eine zugeordnete Ausnehmung (30) der Teilspindel (2) eingreift.

2. Vorrichtung nach Anspruch 1, **dadurch gekennzeichnet, dass** der Schieberanordnung (16,24) wenigstens ein in der Ausnehmung (30) der Teilspindel (2) angeordneter, an einem zugeordneten Druckstück (21) der axial verschiebbar angeordneten Schieberanordnung (16,24) zur Anlage bringbarer, mit einer Rückstellfeder (31) zusammenwirkender Druckbolzen (29) zugeordnet ist, der durch das Betätigungselement (33) axial verschiebbar ist.

3. Vorrichtung nach Anspruch 2, **dadurch gekennzeichnet, dass** mehrere mit gleichem Abstand von der Achse der Teilspindel (2) angeordnete, in Umfangsrichtung gegeneinander versetzte Druckbolzen (29) vorgesehen sind und dass die Schieberanordnung ein den Druckbolzen (29) zugeordnetes, ring- oder zumindest ringsegmentförmiges Druckstück (21) aufweist.

4. Vorrichtung nach einem der vorhergehenden Ansprüche, **dadurch gekennzeichnet, dass** das Formschlusselement (10) an einem radialen Führungsstift (12) befestigt ist, der einen die gehäusefeste Verzahnung (9) aufweisenden Gehäusebereich durchgreift und an seinem vom Formschlusselement (10) abgewandten Ende eine Keilfläche (14) aufweist, dass das Formschlusselement (10) auf der vom Führungsstift (12) abgewandten Seite eine weitere Keilfläche (27) aufweist und dass die die Keilflächen (15,26) aufweisenden Elemente der Schieberanordnung (16,24) radial gegeneinander versetzt angeordnet und durch einen Querstift (22) miteinander verbunden sind, der eine gehäuseseitige Ausnehmung (23) mit axialem Verschiebefreiheitsgrad durchgreift.

5. Vorrichtung nach Anspruch 4, **dadurch gekennzeichnet, dass** die zum Einrücken des Formschlusselements (10) vorgesehene Keilfläche (27) des Formschlusselements (10) bezüglich der Verzahnungen (7,9) mittig angeordnet ist, die vorzugsweise nebeneinander liegend angeordnet sind und gleichen Durchmesser aufweisen.

6. Vorrichtung nach Anspruch 5, **dadurch gekennzeichnet, dass** die gehäusefeste Verzahnung (9) und die Verzahnung (7) an der Teilspindel als identische Außenverzahnungen ausgebildet sind und dass das Formschlusselement (10) eine entsprechende, vorzugsweise die Verzahnungen (7,9) überdeckende Innenverzahnung aufweist.

7. Vorrichtung nach einem der vorhergehenden Ansprüche, **dadurch gekennzeichnet, dass** an der Schieberanordnung (16,24) ein durch eine zugeordnete Ausnehmung des Gehäuses (1) aus diesem herausgeführtes Betätigungselement (37) für manuelle Betätigung angebracht ist.

## Claims

1. Device for receiving workpieces, in particular for machine tools with path control, preferably numerically controlled machine tools, having a dividing device which has a dividing spindle (2), connected to a workpiece carrier (35), which is mounted rotatably in a housing (1) and can be brought into predeterminable angular positions, wherein the dividing spindle (2) can be actuated by means of a path-controlled actuation element (33), by means of which an indexing device (7, 9, 10) associated with the dividing spindle (2), which device can arrest the dividing spindle (2) in a predeterminable angular position, can be brought into a position releasing the dividing spindle (2), and by means of which element the dividing spindle (2) can be rotated, and wherein the indexing device (7, 9, 10) can be actuated by means of a slide arrangement (16, 24) arranged in the housing (1), which arrangement can be adjusted by means of the actuation element (33) counter to the force of at least one return spring (28), **characterised in that** the indexing device (7, 9, 10) has a positive-fit element (10) which can engage into teeth (9) fixed to the housing and corresponding teeth (7) on the dividing spindle (2), this positive-fit element being formed as a toothed wheel segment which can be pressed into the teeth (9) fixed to the housing and the teeth (7) on the dividing spindle (2), covering the sets of teeth (7, 9), and having a counter contour which is adapted to the sets of teeth (7, 9), and **in that** the slide arrangement (16, 24), arranged axially movably in the direction of the axis of the dividing spindle (2), and having two elements provided with wedge surfaces (15, 26), which co-operate with associated wedge surfaces (14, 27) fitted on the positive-fit element (10) to insert and release the positive-fit element (10), can be axially moved by the actuation element (33) which engages into an associated recess (30) of the dividing spindle (2) to rotate the dividing spindle (2).

2. Device according to claim 1, **characterised in that** associated with the slide arrangement (16, 24) is at least one pressure pin (29) arranged in the recess (30) of the dividing spindle (2), which can be brought to abut an associated pressure piece (21) of the axially movably arranged slide arrangement (16, 24), and which co-operates with a return spring (31), this pressure pin being axially movable by the actuation element (33).

3. Device according to claim 2, **characterised in that** several pressure pins (29) are provided, arranged at the same distance from the axis of the dividing spindle (2) and offset with respect to each other in the circumferential direction, and **in that** the slide arrangement has an annular, or at least annular-segment-shaped, pressure piece (21) associated with the pressure pins (29).

4. Device according to one of the preceding claims, **characterised in that** the positive-fit element (10) is secured on a radial guide pin (12) which penetrates a housing region having the teeth (9) fixed in the housing and has a wedge surface (14) at its end remote from the positive-fit element (10), **in that** the positive-fit element (10) has a further wedge surface (27) on the side remote from the guide pin (12), and **in that** the elements of the slide arrangement (16, 24) having the wedge surfaces (15, 26) are arranged radially offset with respect to each other and are joined together by a cross-pin (22) which penetrates a recess (23) in the housing with a degree of axial slide freedom.

5. Device according to claim 4, **characterised in that** the wedge surface (27) of the positive-fit element (10), provided for inserting the positive-fit element (10), is arranged centrally with respect to the sets of teeth (7, 9), these teeth preferably being arranged to lie adjacent to each other and having the same diameter.

6. Device according to claim 5, **characterised in that** the teeth (9) fixed to the housing, and the teeth (7) on the dividing spindle are designed as identical outer teeth, and **in that** the positive-fit element (10) has corresponding inner teeth preferably covering the sets of teeth (7, 9).

7. Device according to one of the preceding claims, **characterised in that** fitted on the slide arrangement (16, 24) is an actuation element (37) for manual actuation leading out of the housing through an associated recess in the housing.

## Revendications

1. Dispositif de fixation de pièces à usiner, en particulier destiné aux machines-outils à commande de contournage, de préférence aux machines-outils à commande numérique, pourvu d'un dispositif diviseur qui comporte une broche à diviser (2), logée de manière à pouvoir tourner dans un bâti (1) et pouvant être amenée clans des positions angulaires que l'on peut prescrire d'avance, qui est reliée à un porte-pièce(s) (35), dans lequel la broche à diviser (2) peut être actionnée à l'aide d'un organe de commande (33), piloté par la commande de contournage, grâce auquel un système d'indexage (7,9,10) associé à la broche à diviser (2) et qui permet de bloquer la broche à diviser (2) dans une position angulaire prédéterminée, peut être amené dans une position qui libère la broche à diviser (2) et lequel organe de commande peut faire tourner la broche à diviser (2), le système d'indexage (7,9,10) pouvant être actionné à l'aide d'un dispositif à coulisse (16,24), disposé dans le bâti (1), que l'on peut déplacer à l'aide de l'organe de commande (33) en s'opposant à la force d'au moins un ressort de rappel (28), **caractérisé en ce que** le système d'indexage (7,9,10) comporte un organe de liaison par imbrication de formes (10), pouvant s'engager dans une denture (9) solidaire du bâti et une denture correspondante (7) ménagée sur la broche à diviser (2), qui est conçu sous la forme d'un segment de roue dentée que l'on peut enfoncer dans la denture (9) solidaire du bâti et la denture (7) ménagée sur la broche à diviser (2), qui recouvre les dentures (7,9) et qui comporte un contour antagoniste adapté aux dentures (7,9), et **en ce que** le dispositif à coulisse (16,24), qui est disposé de manière à pouvoir coulisser dans la direction axiale parallèlement à l'axe de la broche à diviser (2), qui comporte deux éléments pourvus de faces en forme de coin (15,26), coopérant, pour engager et dégager l'organe de liaison par imbrication de formes (10), avec des faces en forme de coin correspondantes (14,27) ménagées sur l'organe de liaison par imbrication de formes (10), peut être déplacé dans la direction axiale par l'organe de commande (33) qui, pour faire tourner la broche à diviser (2), s'engage dans un évidement correspondant (30) de la broche à diviser (2).

2. Dispositif selon la revendication 1, **caractérisé en ce que**, au dispositif à coulisse (16,24), on associe au moins une clavette de pression (29) qui est disposée dans l'évidement (30) de la broche à diviser (2), que l'on peut amener à prendre appui sur un patin de pression (21) correspondant du dispositif à coulisse (16,24) disposé de manière à pouvoir coulisser dans la direction axiale et qui coopère avec un ressort de rappel (31), laquelle clavette de pression peut être déplacée dans la direction axiale par l'organe de commande (33).

3. Dispositif selon la revendication 2, **caractérisé en ce qu'**il est prévu plusieurs clavettes de pression (29), disposées à égale distance de l'axe de la broche à diviser (2) et décalées les unes par rapport aux autres dans la direction circonférentielle, et **en ce que** le dispositif à coulisse comporte un patin de pression (21), associé aux clavettes de pression (29), qui comporte la forme d'un anneau ou d'au moins un segment d'anneau.

4. Dispositif selon l'une des revendications précédentes, **caractérisé en ce que** l'organe de liaison par imbrication de formes (10) est fixé sur une broche de guidage radiale (12) qui traverse une région du bâti comportant la denture (9) solidaire du bâti et qui comporte, à son extrémité opposée à l'organe de liaison par imbrication de formes (10), une face en forme de coin (14), **en ce que**, du côté opposé à la broche de guidage (12), l'organe de liaison par imbrication de formes (10) comporte une autre face en forme de coin (27) et **en ce que** les éléments du dispositif à coulisse (16,24) qui comportent les faces en forme de coin (15,26) sont décalés l'un par rapport à l'autre dans la direction radiale et sont reliés entre eux par une goupille transversale (22) qui traverse, avec un degré de liberté en déplacement axial, un évidement (23) ménagé dans le bâti.

5. Dispositif selon la revendication 4, **caractérisé en ce que** la face en forme de coin (27) de l'organe de liaison par imbrication de formes (10), prévue pour provoquer l'engagement de cet organe (10), occupe une position médiane par rapport aux dentures (7,9), lesquelles, de préférence, sont disposées côte à côte et ont le même diamètre.

6. Dispositif selon la revendication 5, **caractérisé en ce que** la denture (9) solidaire du bâti et la denture (7) ménagée sur la broche à diviser sont conçues sous la forme de dentures extérieures identiques et **en ce que** l'organe de liaison par imbrication de formes (10) comporte une denture intérieure correspondante, qui recouvre de préférence les dentures (7,9).

7. Dispositif selon l'une des revendications précédentes, **caractérisé en ce que**, sur le dispositif à coulisse (16,24), on a monté, pour la commande manuelle, un organe de commande (37) qui sort du bâti (1) par un évidement correspondant de ce dernier.
